Europäisches Patentamt

European Patent Office

Office européen des brevets

(19)

(11) Numéro de publication: **0 411 976 B1**

(12) **FASCICULE DE BREVET EUROPEEN**

(45) Date de publication de fascicule du brevet: **09.11.94**　(51) Int. Cl.5: **A01N 37/36**, A01N 37/46

(21) Numéro de dépôt: **90401900.7**

(22) Date de dépôt: **29.06.90**

(54) **Utilisation de sels organiques de cuivre pour la lutte contre les parasitoses de l'abeille.**

(30) Priorité: **03.07.89 FR 8908899**

(43) Date de publication de la demande:
**06.02.91 Bulletin  91/06**

(45) Mention de la délivrance du brevet:
**09.11.94 Bulletin  94/45**

(84) Etats contractants désignés:
**AT BE CH DE DK ES FR GB GR IT LI LU NL SE**

(56) Documents cités:
**EP-A- 0 008 174**
**DD-A- 260 859**
**FR-A- 2 521 989**

**CHEMICAL ABSTRACTS, vol. 107, no. 11, 14 september1987, page 27, resume no. 89361s, Columbus, Ohio, US; D.POPESKOVIC et al.: "The blockade of hemocyanin function of the mite Varroa jacobsoni as a specific physiological basis for systemic treatment of honeybee varroatosis"**

(73) Titulaire: **BENECHIM SA.**
**Zoning Industriel Nord,**
**Rue Magritte 163**
**B-7860 Lessines (Hainaut) (BE)**

(72) Inventeur: **Dufour, Jean**
**48 Avenue de Saint-Cloud**
**F-78000 Versailles (FR)**
Inventeur: **Bounias, Michel**
**Domaine de Moun-Timau**
**F-84460 Cheval Blanc (FR)**

(74) Mandataire: **Burtin, Jean-François**
**Cabinet GEFIB**
**59, rue Edouard-Vaillant**
**F-92300 Levallois-Perret (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

BIOLOGICAL ABSTRACTS, vol.88, no. 5, 1 september 1989, resume no. 48016, Philadelphia, PA, US; M.NECTOUX etal.: "Experimental results on toxic potentialities of cupric sulfate is treatment of varroatosis of the honeybee"

CHEMICAL ABSTRACTS, vol. 109, no.11, 12 september 1988, page 256, resume no. 91638x, Columbus, Ohio, US; I. M. McPHEE et al.: "Copper heptonate for the treatment of hypocupremia in sheep"

BIOLOGICAL ABSTRACTS; vol. 84, no. 4, 1987, resume no. 34204, Philadelphia, PA, US; D.POPESKOVIC et al.."The blockade of hemocyanin function of the mite Varroa jacobsonias a specific physiological basis for a systemic treatment of the honeybee varroatosis"

**Description**

La présente invention a pour objet l'utilisation de sels organiques de cuivre de formule générale I

R - COO - Cu - OOC - R′     (I)

ainsi les préparations les contenant, éventuellement associés à d'autres principes actifs, pour le traitement des abeilles infestées par différents acariens et principalement par un parasite spécifique, le VARROA JACOBSONI.

Au cours des dernières années, des dépérissements de plus en plus importants ont été constatés dans les populations d'abeilles de nombreuses ruches, dûs à l'extension rapide de ces parasites.

Les traitements utilisant les pesticides classiques, en particulier les acaricides, outre que ceux-ci ne peuvent atteindre tous les parasites, notamment dans le couvain, présentent de graves inconvénients. Il y a ceux liés d'une part à la contamination possible du miel et de la cire par ces produits et, d'autre part ceux liés à la toxicité de ces molécules pour les abeilles dont elles réduisent l'activité et peuvent même entrainer la mort. Certains pesticides ne sont pas, en outre, sans danger pour l'apiculteur.

Le rôle joué par le métabolisme du cuivre dans l'organisme de l'abeille et la possibilité de l'utiliser pour lutter contre le Varroa jacobsoni, en particulier, par l'addition de sels minéraux de cuivre tels que le sulfate de cuivre dans la nourriture des abeilles, a fait l'objet de quelques travaux scientifiques et notamment de celui de BOUNIAS M & POPESKOVIC D.S (1986) CR. Soc. Biol. 1986 (180) 663-668.

L'utilisation de tels sels n'offre toutefois que des possibilités limitées de lutte contre le parasite, du fait que leur structure n'est pas favorable à la diffusion transmembranaire des atomes de cuivre dans l'organisme de l'abeille et du fait qu'ils manifestent une action phagoinhibitrice (anorexique) à l'égard de la prise de nourriture par les abeilles.

L'intensification de cette action phagoinhibitrice en fonction des concentrations obéit à une loi algébrique dont l'analyse a pu être effectuée de manière détaillée.

Les résultats obtenus sur la courbe ci-dessous n° 1 ont été obtenus à partir d'expériences effectués en Laboratoire sur des lots de 100 abeilles, placées dans de petites cages appelées logettes, en absence de Reine. La nourriture mise à disposition des abeilles, est placée dans un tube gradué, ce qui permet de mesurer la quantité ingérée chaque jour. L'expérimentation est menée simultanément avec différentes cagettes chacune recevant, pour la nourriture des abeilles, un sirop de saccharose à 2 kg pour 1 l d'eau, (soit 66% poids/poids), contenant des quantités variables de sulfate de cuivre. (La hauteur des traits verticaux correspondant à chaque point exprime la dispersion des résultats observés selon une présentation classique de détermination statistique).

**Courbe n° 1**

**Intensification du caractère phagoinhibiteur en fonction**
**des concentrations de sulfate de cuivre**

Les sels de cuivre selon l'invention, dont la teneur en cuivre est généralement comprise entre 12 et 30 % présentent de nombreux avantages par rapport aux sels minéraux de ce métal du fait de :
- l'appétence que les abeilles présentent vis-à-vis d'eux
- leur bonne pénétration à l'intérieur de l'organisme des abeilles
- leur puissante activité antiparasitaire notamment à l'égard du Varroa Jacobsoni
- l'absence de stockage cumulatif de cuivre à l'intérieur de l'organisme des abeilles.

Contrairement à la quasi-totalité des pesticides, les sels de cuivre selon l'invention ne provoquent aucune contamination du miel produit, ni par accumulation de cuivre, ni par introduction dans la ruche de molécules toxiques. Ils n'entrainent aucune modification des caractéristiques organoleptiques du miel.

Leur solubilité dans l'eau et dans les solutions de saccharose fréquemment utilisées pour le nourrissement des abeilles, ainsi que leur excellente stabilité permettent en outre, une grande facilité d'utilisation sous forme de poudre, de solution, de candy(*)ou encore de pâte, éventuellement associés à d'autres principes actifs.

Les sels de cuivre selon l'invention, de formule générale :

RCOO - Cu - OOCR'

sont caractérisés par le fait que les radicaux R et R' constitutifs des acides R-COOH et R'-COOH, qui peuvent être identiques ou différents, sont choisis parmi :
- soit des chaînes hydrocarbonées polyhydroxylées ayant jusqu'à 12 atomes de carbone, comme l'acide citrique, l'acide tartrique ou l'acide gluconique.
- soit des chaînes hydrocarbonées linéaires ou cycliques portant un groupement aminé, comme la leucine, l'isoleucine, la valine, ayant jusqu'à 10 atomes de carbone.
- soit des chaînes hydrocarbonées substituées par plusieurs groupements aminés et par un groupement carboxylé linéaire ou cyclique ayant jusqu'à 10 atomes de carbone, comme la lysine ou l'acide

**NB. Explication du terme "CANDY", cf. p.6**

diaminopimélique
- soit des chaînes hydrocarbonées substituées par un groupement aminé et par un groupement amide comme l'acide glutamique
- soit des chaînes hydrocarbenées substituées par un ou plusieurs groupements hydroxylés et par un ou des groupes carboxylés comme des acides uroniques ou sacchariques.

Il s'agit en particulier :
- du gluconate et du saccharate de cuivre :
$C_{12}H_{22}O_{14}Cu$ PM = 453,8 Cu = 14 %
poudre cristalline bleue, très soluble dans l'eau
- du glucoheptonate de cuivre :
$C_{14}H_{26}O_{16}Cu$ PM = 513,9 Cu = 12,35 %
poudre cristalline verte, très soluble dans l'eau,
PF 152° $[\alpha]_D$ = -O.84 % c = 1% dans l'eau
- du glycinate de cuivre :
$C_4H_8N_2O_4Cu$ PM = 211,6 Cu = 30 %
poudre cristalline bleu foncé, PF 270°
- du leucinate de Cuivre
$C_{12}H_{24}N_2O_4Cu$ PM = 323,9 Cu = 19,6 %
poudre cristalline bleu gris, soluble dans l'eau à 20° = 1% PF 270° (dec)
- de l'isoleucinate de cuivre :
$C_{12}H_{24}N_2O_4Cu$ PM = 323,9 Cu = 19,6 %
poudre cristalline bleu foncé, soluble dans l'eau à 20° = 1 % PF = 245°
- du L-aspartate de cuivre :
$C_8H_{12}N_2O_8Cu$ PM = 327,7 Cu = 19,4 %
poudre cristalline bleu roi, soluble dans l'eau à 20° = 1 % PF 250°
- du L-glutamate de cuivre :
$C_{10}H_{16}N_2O_8Cu$ PM = 355,8 Cu = 17,85 %
poudre cristalline bleue, soluble dans l'eau à 20° = 4 % PF 262°
- de l'asparaginate de cuivre :
$C_8H_{14}N_4O_6Cu$ PM = 325,8 Cu = 19,5 %
poudre cristalline bleu lilas, soluble dans l'eau à 20° = 0,5 % PF >300°
- du lactate de cuivre :
$C_6H_{10}O_6Cu$ PM = 241,7 Cu = 26,3 %
poudre cristalline bleu clair, soluble dans l'eau à 20° = 8% PF = 266°
- du citrate de cuivre :
$C_6H_4O_7Cu_2$ PM = 315,2 Cu = 40,3 %
poudre cristalline bleue, soluble dans l'eau à 20° = 1% PF = 246°
- du citrate de cuivre
$C_{12}H_{10}O_{14}Cu_3$ PM = 563,36 Cu = 33,3 %
soluble dans l'eau à 20° = 10% P = 246°
- du gluconate glucoheptonate de cuivre :
$C_{13}H_{24}O_{15}Cu$ PM = 483,9 Cu = 13,2 %
poudre cristalline bleu turquoise, très soluble dans l'eau PF 155° $[\alpha]_D$ = - 0.3 c = 1% dans l'eau
- du gluconate aspartate de cuivre :
$C_{10}H_{17}NO_{11}Cu$ PM = 390,75 Cu = 16,25 %
- du gluconate glutamate de cuivre :
$C_{11}H_{19}NO_{11}Cu$ PM = 404,8 Cu = 15,7 %
- du L.pyrrolidone carboxylate de cuivre :
$C_{10}H_{12}N_2O_6Cu$ PM = 319,8 Cu = 19,87 %
- hydrate à 7,15 % eau : Poudre cristalline bleue
Cu = 18,55 % PF 250° (dec)

Tous ces produits peuvent être plus ou moins solvatés avec des molécules d'eau. Ces produits peuvent exister sous forme de sels à proportions stoechiométriques ou non stoechiométriques ou sous forme de complexes.

L'invention concerne l'utilisation des sels de formule générale I comme indiqué ci-dessus, aussi bien à l'état pur que sous forme de compositions telles que solutions aqueuses, sirops, pâtes et "candy" (ce terme désigne des préparations à base de sucre, de consistance pâteuse, utilisées couramment par les apiculteurs), dans lesquels ils peuvent être associés soit à des supports inertes, soit à des éléments nutritifs pour les abeilles, soit à d'autres principes actifs présentant éventuellement une activité antiparasitaire complémentaire.

Les avantages particuliers que l'on peut retirer de l'utilisation des produits selon l'invention pour le traitement de la Varroatose des abeilles ont été mis en évidence par une série d'expérimentations qui ont démontré :

**1°-** une action spécifique de destruction des Varroas Jacobsoni mise en évidence par le dénombrement des Varroas éliminés lors du traitement de ruches par nourrissement au gluconate de cuivre à différentes doses (O g/l - O,2 g/l - O,5 g/l).

Les abeilles ont été nourries avec des sirops de saccharose à 66 % p/p à des concentrations variables de Gluconate de Cuivre et la totalité du sirop mis à la disposition des abeilles était absorbée chaque jour, ce qui est une preuve supplémentaire de l'appétence de celles-ci vis-à-vis du produit.

Chaque ruche était munie à sa partie inférieure d'une plaque plastique enduite d'une graisse consistante ; chaque jour, à la même heure, la plaque était retirée, et l'on effectuait le dénombrement des varroas tombés sur la plaque.

Une grille surmontant cette plaque permettait d'éviter que les abeilles puissent procéder à l'enlèvement des varroas

Les résultats figurés sur la courbe n°2 ont été obtenus à la suite d'expérimentations effectuées en grandeur réelle dans des ruches contenant de 20.000 à 50.000 abeilles.

**2°-** L'efficacité du traitement, a été définie par le rapport entre le nombre de Varroas subsistant dans les diverses colonies d'un rucher, après traitement par des solutions à concentrations variées, et le nombre de Varroas contenus dans les ruches témoins, ces deux nombres étant mesurés après un traitement à l'amitraze. Cette expérimentation a été pratiquée sur un lot de 14 ruches et ses résultats font l'objet du tableau 3 ci-après.

**Courbe 2**

**Chute des varroas lors d'un traitement (au temps 0)**

**par nourrissement au gluconate de cuivre à différentes doses**

**(–.– : 0 g/1, –Δ– : 0,2 g/1, –   – : 0,5 g/1, –o– : 1 g/1)**

**Les écarts-types sont donnés pour 2 mesures pour les ruches**

**témoins (0 g/1) et 4 pour les traitées**

CHUTE DES VARROAS APRES NOURRISSEMENT

AU GLUCONATE DE CUIVRE

A DIFFERENTES CONCENTRATIONS

TABLEAU 3

| RUCHES N°.. | TRAITEMENT | CHUTE DES VARROAS | EFFICACITE |
|---|---|---|---|
| 1, 6 | O g/l | 820 ± 380 (2) | |
| 2, 3, 4, 5 | 0,2 g/l | 165,5 ± 84,1 (4) | 79,8 % |
| 7, 8, 9, 10 | 0,5 g/l | 207 ± 172 (4) | 74,7 % |
| 11, 12, 13, 14 | 1 g/l | 109 ± 141 (4) | 86,7 % |

Les expérimentations permettant d'aboutir aux résultats du tableau 3 ci-dessus, ont été conduites en grandeur réelle sur un ensemble de 14 ruches. Chacune des ruches a reçu 6,75 litres de sirop de saccharose à 66 % p/p, à différentes concentrations de gluconate de cuivre s'échelonnant de O,02 à O,5 g/l. Le sirop a été très bien ingéré en totalité, et il n'a été noté aucune augmentation du pourcentage de mortalité des abeilles en comparaison avec les témoins.

Des relevés de la chute des varroas ont été effectués d'abord quotidiennement puis tous les trois jours, à partir du début de la distribution du sirop.

Pour cela, à la base de chaque ruche, on a disposé une plaque enduite de graisse consistante et protégée par une grille, comme il a été expliqué ci-dessus, pour permettre le dénombrement des varroas. La chute commence à être significative par rapport aux ruches témoins ayant reçu du sirop de sucre pur après absorption, par les abeilles, de 3 litres de sirop par ruche en 10 jours. Comme on peut le constater, a l'examen des chiffres du tableau, le gluconate de cuivre s'avère efficace même à faible dose.

Le dénombrement des varroas restant, a été effectué 2 jours après la dernière distribution de sirop, en faisant subir, à chaque ruche, un traitement de choc à l'aide d'un acaricide (en l'occurence, la préparation commerciale à base d'AMITRAZE).

Il était admis que ce traitement est efficace sur la totalité des varroas vivant sur les abeilles, à l'exception des larves pouvant exister dans les cellules operculées.

L'efficacité du traitement au gluconate de cuivre est calculée en rapportant le nombre de varroas tombés durant le traitement, au nombre total de varroas résultant de l'addition des varroas tombés et des varroas existants.

Les moyennes et les écarts types ont été calculés peur le nombre de mesures effectuées, correspondant au nombre de ruches, ce chiffre étant indiqué entre parenthèses, à la suite des chiffres de la troisième colonne du tableau 3.

Le calcul statistique conduit donc à une efficacité moyenne de 80 ± 6 % par rapport aux ruches témoins. Un avantage très important des produits selon l'invention résulte du fait qu'ils peuvent être administrés en continu sur de longues périodes, ce qui permet de détruire les parasites au fur et à mesure de leur émergence des alvéoles operculées des ruches alors que ce n'est pas possible lorsque l'on utilise des acaricides comme l'amitraze, en particulier, du fait de leur toxicité pour les abeilles.

Les produits selon l'invention permettent donc la limitation de l'infestation par les parasites, et la prévention de la réinfestation. Les sels de cuivre selon l'invention sont incorporés par les ouvrières dans le nourrissement des larves et exercent leur efficacité sur les parasites protégés des pesticides par les opercules des alvéoles.

Aucun des traitements actuellement connus, ne peut être prolongé sans dommage pour la vie des abeilles, et la qualité des produits fournis par celles-ci.

C'est le cas, en particulier, des pesticides qui, outre leur toxicité vis-à-vis des abeilles, s'incorporent à la cire, et provoquent l'apparition de produits de coupure de la molécule, dans le miel.

Au contraire, lors de l'utilisation des produits selon l'invention, on constate une absence de nocivité pour les abeilles, pour les deux raisons suivantes :

**1-** la partie organique des sels de Cuivre selon l'invention n'est pas toxique, ni susceptible de donner par dégradation des métabolites toxiques.

**2-** le cuivre administré sous forme de sels selon l'invention, n'engendre aucune accumulation ni dans le miel, ni dans le corps des abeilles elles-mêmes.

Les faits exposés ont été mis en évidence par des expérimentations effectuées en grandeur réelle, sur un ensemble de 64 ruches, dont 49 étaient munies de hausses. Les résultats sont donnés dans le tableau 4, ci-dessous, dans lequel la première colonne correspond à la quantité totale administrée dans la période, la deuxième à la quantité de cuivre trouvée en mg/kg de miel dans le corps de différentes ruches, et la troisième à la quantité de cuivre en mg/kg de miel retiré des réhausses.

Les quantités de cuivre ont été mesurées par absorption atomique à l'aide d'un spectrographe (spectrographe PERKIN ELMER 420).

Les mesures sont effectuées après extraction de l'ensemble du miel, sur un échantillon moyen.

TABLEAU 4

| Quantités résiduelles de cuivre mesurées dans des échantillons de miel prélevés au bout de 7 ± 1 mois après administration de Gluconate de Cuivre (N = nombre de mesures) | | |
|---|---|---|
| DQSES TQTALES PAR RUCHE | CQRPS DES RUCHES | HAUSSES |
| | (quantité en Cu en mg/kg) | |
| O,O g (Témoins) | 3,4 ± 1,9 (N = 9) | 4,2 ± 3,3 (N = 3) |
| 1,25 g | 5,3 ± 2,5 (N = 28) | 2,7 ± 1,7 (N = 19) |
| 2,50 g | 1,0 ± 0,25 (N = 21) | 0,8 ± 1,0 (N = 21) |
| 3,00 g | 1,6 ± 1,0 (N = 6) | 0,6 ± 0,1 (N = 6) |

On constate que la quantité de cuivre résiduelle n'est pas proportionnelle à la quantité de produit administré, et qu'il y a une quantité très faible mais non négligeable de cuivre dans le miel récolté dans les ruches, même celles n'ayant pas reçu de produit. Les différences ne sont pas significatives.

L'utilisation des sels organiques de Cuivre selon l'invention présente un avantage très important par rapport à celle des sels minéraux, et en particulier, du sulfate car du fait de la métabolisation de ceux-ci dans le corps des abeilles, l'accumulation de Cuivre dans le miel est très inférieure comme il ressort des deux tableaux ci-dessous, correspondant à des expériences comparatives effectuées d'une part, avec du gluconate de Cuivre, et d'autre part avec du sulfate de Cuivre.

TABLEAU A

| Doses totales par ruche | Doses en Cu minéral | Teneur en cuivre du miel dans les corps des ruches (mg/kg) |
|---|---|---|
| O g | 0 g | O,674 ± 0,065 (N = 2) |
| 1,35 g | O,189 g | 0,686 ± O,084 (N = 4) |
| 3,38 g | 0,473 g | 0,836 ± 0,296 (N = 4) |
| 6,75 g | 0,945 g | 0,656 ± 0,014 (N = 4) |

TABLEAU B

| Doses totales par ruche | Doses en Cu minéral | Teneur en cuivre du miel dans les corps des ruches (mg/kg) |
|---|---|---|
| O g | 0 g | 1,98 ± 2,03 (N = 2) |
| 1,25 g | O,319 g | 4,37 ± 2,89 (N = 4) |
| 2,00 g | 0,51 g | 8,03 ± 10,46 (N = 4) |

On constate que bien que les quantités de Cuivre administrées sous forme de gluconate aient été très supérieures, la teneur en Cuivre du miel est très inférieure à celle observée après l'administration de sulfate de Cuivre.

Le fait qu'il ne se produit pas de stockage de cuivre à l'intérieur du corps des abeilles est mis en évidence par l'ensemble des quatre graphiques suivants (Courbes A, B, C et D) :

## COURBE A

## COURBE B

## COURBE C

## COURBE D

Ces quatre graphiques font apparaitre la quantité de cuivre fixée à l'intérieur du corps des abeilles en fonction du temps, en jours, et la quantité de cuivre ingérée pendant la même période, en fonction de la teneur en gluconate de cuivre du sirop de nourrissement.

La courbe A correspond aux témoins qui ne reçoivent que du sirop, soit O g/l, la courbe B à un nourrisement à 0,2 g de cuivre/l, la courbe C à un nourrissement à 0,3 g de cuivre/l et la courbe D à un nourrissement à O,5 g de cuivre/l.

La détermination de la quantité de cuivre à l'intérieur du corps des abeilles est effectuée par absorption atomique sur des échantillons de 5 abeilles, sur le liquide surnageant après broyage de celles-ci et centrifugation.

## EFFET SUR L'APPETENCE DES ABEILLES

Les produits selon l'invention, et en particulier le Gluconate de cuivre, présentent un avantage considérable du fait de la grande appétence des abeilles vis-à-vis de ceux-ci.

Ces mesures d'appétence ont été effectuées sur des lots de 100 abeilles placées à l'intérieur de cagettes, auxquelles, les produits ont été offerts dans de la solution de nourrissement classique de saccharose à 66 % p/p, à partir d'un récipient gradué permettant de mesurer la quantité consommée par jour.

Les résultats obtenus avec le Gluconate de Cuivre sont donnés par les courbes des diagrammes $A_1$, $B_1$ et $C_1$, ci-dessous, dans lesquels, la courbe $A_1$ correspond au nourrissement avec du Gluconate de cuivre avec apport de pollen, $B_1$ Gluconate de cuivre sans apport de pollen et $C_1$ Sulfate de cuivre sans apport de pollen.

Il faut noter que le pollen a été mis à disposition des abeilles en quantité suffisante à l'intérieur de la cagette, sans qu'il soit mélangé au sirop.

APPETENCE COMPAREE

GLUCONATE/SULFATE DE Cu

Les déterminations ont été faites journellement, et la longueur des traits verticaux des diagrammes ci-dessus, est proportionnelle à la dispersion des résultats observés. Elles mettent en évidence une appétence très supérieure dans le cas de l'utilisation des produits selon l'invention.

Les résultats décrits dans les pages précédentes concernent essentiellement des expérimentations effectuées à l'aide de Gluconate de cuivre.

Des résultats similaires concernant la destruction des varroas ont été obtenus avec les autres produits selon l'invention et notamment avec ceux énumérés pages 4, 5 et 6, ci-dessus, et des tests comparatifs d'appétence ont été effectués en utilisant la même technique que précedemment.

Les résultats de ces tests sont rassemblés dans le Tableau 7, ci-après, dont les chiffres correspondent à des mesures effectuées sur des abeilles encagées ayant du pollen à disposition, et sont des moyennes exprimées en microlitre par abeille et par jour pour N.releves. Ils doivent être comparés à l'appétence pour le sirop de sucre pur, qui est de 21,13 ± 6,31 microlitres par abeille et par jour (observation effectuée pour N = 16 mesures)

Indépendemment du rôle joué par la présence d'atomes de cuivre, la partie organique des molécules selon l'invention joue donc un rôle important sur l'appétence des abeilles, vis-à-vis de celles-ci.

**EFFET SUR L'ACTIVITE BIOLOGIOUE**

On a montré en outre que cette partie organique peut jouer un rôle important sur le métabolisme des abeilles. Ceci est particulièrement vrai dans le cas du gluconate de cuivre dont l'ingestion par les abeilles provoque, même à très faible dose, une augmentation momentanée et significative de la glucosémie de l'abeille qui stimule l'activité de celles-ci et donc, accroit la production de miel.

**TABLEAU 7**

**APPÉTENCE COMPARÉE POUR DIFFÉRENTS SELS DE CUIVRE**

N.B.: Les moyennes et écarts types sont donnés pour N relevés-L'appétence du sirop de sucre pur est de 21,13±6,31 microlitres/abeille/jour pour N = 1

| PRODUIT / CONCENTRATION m.M. | VALEURS ABSOLUES | | | | | | VALEURS RELATIVES/SIROP DE SUCRE PUR | | |
|---|---|---|---|---|---|---|---|---|---|
| | 0,44 | 0,61 | 1,1 | 1,54 | 2,4 | 1/1 GLUCONATE DE CUIVRE | MESURE 1 | MESURE 2 | MOYENNE |
| GLUCONATE DE CUIVRE | 22,3 ± 2,5 (N = 15) | - | 21,2 ± 2,6 | - | - | - | 105,5% | 100,3% | 102,9% |
| GLUCOHEPTONATE DE CUIVRE | 15,68±2,35 (N = 16) | - | 14,58±3,16 (N = 16) | - | - | 14,90±3,64 | 74,2% | 69,0% | 71,6% |
| GLYCINATE DE CUIVRE | 16,65±5,01 (N = 16) | - | 15,5±5,03 (N = 16) | - | - | 14,30±3,52 (N = 11) | 78,0% | 73,7% | 75,85% |
| ISO LEUCINATE DE CUIVRE | - | 16,69±5,03 (N = 51) | - | 13,57±5,77 (N = 53) | 13,79±5,73 (N = 46) | - | 78,9% | 64,2% | 71,55% |
| ASPARTATE DE CUIVRE | - | 17,96±7,20 (N = 89) | - | 14,68±5,40 (N = 77) | 12,49±5,11 (N = 73) | - | 76,5% | 69,4% | 55,1% |
| GLUTAMATE DE CUIVRE | 16,18±4,66 (N = 16) | - | 16,64±7,97 (N = 16) | - | - | 11,56±6,32 (N = 10) | 76,5% | 78,7% | 77,6% |
| ASPARAGINATE DE CUIVRE | 15,48±4,32 (N = 11) | - | 11,97±3,34 (N = 12) | - | - | 12,21±4,29 (N = 10) | 73,2% | 56,3% | 65,0% |
| LACTATE DE CUIVRE | 15,30±4,24 (N = 12) | - | 15,60±4,34 (N = 12) | - | - | 10,95±3,54 (N = 9) | 72,4% | 73,8% | 73,6% |
| CITRATE DE CUIVRE | 14,71±4,25 (N = 15) | - | 12,67±3,96 (N = 15) | - | - | 12,67±3,96 (N = 15) | 69,5% | 60,0% | 64,75% |
| LEUCINATE DE CUIVRE | 15,83±4,53 (N = 15) | - | 13,02±2,42 (N = 15) | - | - | 13,02±2,42 (N = 15) | 74,0% | 61,6% | 67,8% |

Cet effet résulte, comme le montre les diagrammes des figures 8, ci-dessous, d'une augmentation de l'activité des trehalases (enzymes qui libèrent le glucose dans l'organisme de l'abeille à partir d'un précurseur stocké dans l'hémolymphe), qui mettent en évidence l'action du gluconate de cuivre sur la glucosémie de l'abeille après ingestion de quantités croissantes de ce produit.

## Figure 8

### Action de différentes doses
### A : 0,25 cmole, B : 1 nmole, C : 4 cmoles, D : 16 cmoles
### de gluconate de cuivre sur la glycémie de l'abeille
### (glucosémie relative –o– et tréhalosémie relative –Δ–)

L'augmentation de la concentration en glucose et en tréhalases dans l'hémolymphe des abeilles, à la suite d'absorption de gluconate de cuivre, est mis en évidence par les courbes $A_3$ et $B_3$, ci-après :
- la courbe $A_3$ correspond à des expériences sans administration d'un inhibiteur de tréhalases

- la courbe B$_3$ avec administration d'un inhibiteur.

**COURBES A.3**

**COURBE B.3**

La courbe A$_4$ fait apparaître la variation de la glucosémie de l'abeille à la suite de l'ingestion du gluconate de cuivre. La figure B$_4$, la variation de l'activité des tréhalases dans l'hémolymphe des abeilles ainsi traitées.

## COURBE A4

GLUCOSE (MM)

## COURBE B4

ACTIVITÉ (MM/H)

Il est connu que le glucose contenu dans l'hémolymphe est la principale source d'énergie des abeilles et l'augmentation de la teneur de l'hémolymphe en cette substance, liée à l'ingestion de gluconate de cuivre, est un facteur favorable à la productivité des ruches. Indépendemment de l'augmentation de production de miel, cet effet s'apprécie par l'augmentation d'activité de nettoyage de la ruche par les abeilles.

Des avantages complémentaires peuvent donc être obtenus indépendemment de la destruction des varroas, par l'utilisation du gluconate de cuivre. Une activité similaire a été montrée par d'autres produits selon l'invention, en particulier le glucoheptonate de cuivre, le gluconate glucoheptonate de cuivre, le gluconate glutamate de cuivre.

L'utilisation de sels contenant un atome d'azote exerce également un effet favorable sur le métabolisme des abeilles. Le pollen qu'elles récoltent est une des principales sources de substances azotées dont celles-ci ont besoin, et l'apport supplémentaire obtenu par l'utilisation des produits selon l'invention est un facteur non négligeable favorisant la productivité des ruches.

CONCLUSION

L'utilisation des produits selon l'invention permet de combattre de façon systémique, le Varroa Jacobsoni, sans aucune altération de la qualité du miel et de la cire, et sans porter atteinte à la bonne santé des abeilles, ce qui est un facteur d'équilibre de leur activité et de la productivité des ruches.

**Revendications**

1. A titre d'application nouvelle, l'utilisation pour le traitement des parasitoses dues à des acariens chez les abeilles, des sels organiques de cuivre répondant à la formule :

R - COO - Cu - COC - R'

dans laquelle les radicaux R et R' identiques ou différents sont :
- soit des chaînes hydrocarbonées polyhydroxylées ayant jusqu'à 12 atomes de carbone
- soit des chaînes hydrocarbonées linéaires ou cycliques substituées par un groupement aminé ayant jusqu'à 10 atomes de carbone
- soit des chaînes hydrocarbonées substituées par plusieurs groupements aminés et par un groupement carboxylé, linéaire ou cyclique ayant jusqu'à 10 atomes de carbone
- soit des chaînes hydrocarbonées ayant substituées par un groupement aminé et par un groupement amide
- soit des chaînes hydrocarbonées ayant substituées par un ou plusieurs groupements hydroxylés et par un ou des groupes carboxylés

utilisés seuls ou associés à des éléments nutritifs pour abeilles, sous les formes usuelles de présentation.

2. Utilisation selon la revendication 1 dans laquelle l'acarien parasitose des abeilles est le Varroa Jacobsoni

3. Utilisation pour le traitement des parasitoses, d'un sel de cuivre, selon la revendication 1. à savoir le gluconate de cuivre.

4. Utilisation pour le traitement des parasitoses d'un composé selon la revendication 1., à savoir le saccharate de cuivre.

5. Utilisation pour le traitement des parasitoses d'un composé selon la revendication 1., à savoir le glucoheptonate de cuivre.

6. Utilisation pour le traitement des parasitoses d'un composé selon la revendication 1., à savoir le glycinate de cuivre.

7. Utilisation pour le traitement des parasitoses d'un composé selon la revendication 1. choisi parmi le leucinate et l'isoleucinate de cuivre.

8. Utilisation pour le traitement des parasitoses d'un composé selon la revendication 1., à savoir l'aspartate de cuivre.

9. Utilisation pour le traitement des parasitoses d'un composé selon la revendication 1., à savoir le glutamate de cuivre.

10. Utilisation pour le traitement des parasitoses d'un composé selon la revendication 1., à savoir l'asparaginate de cuivre.

**EP 0 411 976 B1**

**11.** Utilisation pour le traitement des parasitoses d'un composé selon la revendication 1., à savoir le lactate de cuivre.

**12.** Utilisation pour le traitement des parasitoses d'un composé selon la revendication 1., à savoir le citrate de cuivre.

**13.** Utilisation pour le traitement des parasitoses d'un composé selon la revendication 1., à savoir le gluconate glucoheptonate de cuivre.

**14.** Utilisation pour le traitement des parasitoses d'un composé selon la revendication 1., à savoir le gluconate aspartate de cuivre.

**15.** Utilisation pour le traitement des parasitoses d'un composé selon la revendication 1., à savoir le gluconate glutamate de cuivre.

**16.** Utilisation pour le traitement des parasitoses d'un composé selon la revendication 1., à savoir le pyrrolidone Carboxylate de cuivre

**17.** Compositions destinées au traitement des parasitoses chez les abeilles (Varroatose) qui consistent en ce qu'on incorpore un composé selon la revendication 1 à 15. à un excipient ou un véhicule inerte, appétent pour les abeilles.

**18.** Compositions selon la revendication 17. dans lequel on ajoute en plus, un autre principe actif synergique ou complémentaire.

**19.** Un procédé de fabrication des compositions selon la revendication 17 ou 18., renfermant à titre de principe actif, au moins un composé selon les revendications 1 à 16. caractérisé en ce que le principe actif est réparti avec des diluants inertes pour former des poudres, solutions, sirops, pâtes avec, éventuellement, addition de tous excipients, principes nutritifs ou autres substances actives.

**20.** Un nouveau sel de Cuivre avec un acide organique carboxylique choisi dans le groupe constituè par le gluconate/saccharate de Cuivre, le gluconate/glucoheptonate de cuivre, le gluconate/aspartate de Cuivre, le gluconate/glutamate de Cuivre et le l-pyrrolidone carboxylate de cuivre.

**21.** Un procédé pour le traitement systémique des parasitoses chez l'abeille, et notamment de la Varroatose des abeilles, qui permet la destruction des acariens sans dommage pour la population des ruches, ni dégradation de la qualité du miel et de la cire, et qui permet en outre, d'augmenter la productivité des ruches, dans lequel on administre à la population d'une ruche d'abeilles, une composition selon l'une des revendications 17 et 18., seule ou incorporée à la nourriture des abeilles.

**22.** Utilisation de l'acide gluconique et de ses sels, seuls ou sous forme de composition pour la stimulation de l'activité des abeilles.

**23.** Utilisation de l'acide glucoheptonique et de ses sels seuls ou sous forme de composition pour l'augmentation de l'activité des abeilles.

**24.** Utilisation de sels mixtes de l'acide gluconique et de l'acide glucoheptonique, seuls ou sous forme de composition pour l'augmentation de l'activité des abeilles.

**Claims**

**1.** As a new use, the utilization for treating the parasitosis due to acarians in the bees, of organic salts of copper having the formula:

R-COO-Cu-OOC-R'

wherein the radicals R and R', the same or different, are
either polyhydroxylated hydrocarbon chains having up to 12 carbon atoms

21

EP 0 411 976 B1

or linear or cyclic hydrocarbon chains which are substituted with an amino group, having up to 10 carbon atoms
or straight or cyclic hydrocarbon chains which are substituted with several amino groups and with a carboxylic group having up to 10 carbon atoms
or hydrocarbon chains substituted with an amino group and an amido group
or hydrocarbon chains substituted with one or several hydroxylated groups and with one or several carboxylic groups
used alone or jointly with nutritive matters for the bees, in the usual forms of presentation.

2. Use according to clain 1 wherein the acarians responsible for the parasitosis of the bees is Varroa Jacobsoni.

3. Use for the treatment of parasitosis of a copper salt according to claim 1, i.e. copper gluconate.

4. Use for the treatment of parasitosis of a compound according to claim 1, i.e. copper saccharate.

5. Use for the treatment of parasitosis of a compound according to claim 1, i.e. copper glucoheptonate.

6. Use for the treatment of parasitosis of a compound according to claim 1, i.e. copper glycinate.

7. Use for the treatment of parasitosis of a compound according to claim 1 selected among copper leucinate and copper isoleucinate.

8. Use for the treatment of parasitosis of a compound according to claim 1, i.e. copper aspartate.

9. Use for the treatment of parasitosis of a compound according to claim 1, i.e. copper glutamate.

10. Use for the treatment of parasitosis of a compound according to claim 1, i.e. copper asparaginate.

11. Use for the treatment of parasitosis of a compound according to claim 1, i.e. copper lactate.

12. Use for the treatment of parasitosis of a compound according to claim 1, i.e. copper citrate.

13. Use for the treatment of parasitosis of a compound according to claim 1, i.e. copper gluconate-glucoheptonate.

14. Use for the treatment of parasitosis of a compound according to claim 1, i.e. copper gluconate-aspartate.

15. Use for the treatment of parasitosis of a compound according to claim 1, i.e. copper gluconate-glutamate.

16. Use for the treatment of parasitosis of a compound according to claim 1, i.e. copper pyrrolidone carboxylate.

17. Compositions intended to the treatment of parasitosis in the bees and namely varroatosis - which consist in that a compound according to any of the claims 1 to 15 is incorporated to an inert carrier or vehicle which is appetent for the bees.

18. Compositions according to claim 17 wherein further another active ingredient with synergistic or complementary activity is added.

19. A process for producing the composition according to claim 17 or claim 18 containing as an active ingredient at least one compound according to claims 1 to 16, wherein the active ingredient is distributed with inert diluents to produce powders, solutions, sirups, pastes optionally together with addition of any carrier, nutriments and other active substances.

22

**20.** A new copper salt with a carboxylic organic acid selected from the group consisting of copper gluconate/saccharate, copper gluconate/glucoheptonate, copper gluconate/aspartate, copper gluconate/glutamate and copper l-pyrrolidone carboxylate.

**21.** A method of treatment for systematically treating the parasitosis in the bees and namely the varroatosis of the bees, which allows eradication of the acarians without any damage for the population of the hives nor any worsening of the quality of the honey and the wax and which further allows an increase in the productivity of the hives, in which it is given to the population of a hive of bees, a composition according to any of claims 17 and 18 alone or incorporated in the feeding of the bees.

**22.** Use of gluconic acid and the salts thereof, alone or in the form of compositions for stimulating the activity of the bees.

**23.** Use of glucoheptonic acid and the salts thereof, alone or in the form of compositions for increasing the activity of the bees.

**24.** Use of the mixed salts of gluconic acid and glucoheptonic acid, alone or in the form of compositions for increasing the activity of the bees.

**Patentansprüche**

**1.** Als eine neue Anwendung, die Verwendung für Bekämpfung der von Milben verursachte Parasitosen bei Bienen, der organischen Salze des Kupfers mit der Formel :

R-COO-Cu-OOC-R'

worin die Reste R und R' gleich oder verschiedene sind
eine polyhydroxylierte Kohlenwasserstoffhaltige Kette mit bis 12 Kohlenstoffatomen
oder eine gerade oder zyklische, mit einer amino Gruppe substituierte Kohlenwasserstoffhaltige Kette mit bis 10 Kohlenstoffatomen
oder eine mit mehrere amino Gruppe und mit einer Carboxy Gruppe, substituierte, gerade oder zyklische Kohlenwasserstoffhaltige Kette mit bis 10 Kohlenstoffatomen
oder eine mit einer amino Gruppe und einer Amido Gruppe substituierte Kohlenwasserstoffhaltige Kette
oder eine mit einer oder mehrere Hydroxy Gruppe und mit einer oder mehrere Carboxy Gruppe substituierte Kohlenwasserstoffhaltige Kette bedeuten allein oder mit Futter für Bienen zusammengemischt in die üblichen Formen von Packung.

**2.** Verwendung nach Anspruch 1, worin die Milben die die Parasitosen der Bienen verursachten, Varroa Jacobsoni sind.

**3.** Verwendung für Bekämpfung der Parasitosen, eines Kupfersalzes nach Anspruch 1, nämlich Kupfer Glukonat.

**4.** Verwendung für Bekämpfung der Parasitosen, eines Kupfer Salzes, nach Anspruch 1, namlich Kupfer Saccharat.

**5.** Verwendung für Bekämpfung der Parasitosen, einer Verbindung nach Anspruch 1, nämlich Kupfer Glukoheptonat.

**6.** Verwendung für Bekämpfung der Parasitosen, einer Verbindung nach Anspruch 1, nämlich Kupfer Glycinat.

**7.** Verwendung für Bekämpfung der Parasitosen, einer Verbindung nach Anspruch 1, die aus der Gruppe von Kupfer Leucinat und Kupfer Isoleucinat ausgewählt ist.

**8.** Verwendung für Bekämpfung der Parasitosen, einer Verbindung nach Anspruch 1, nämlich Kupfer Aspartat.

**9.** Verwendung für Bekämpfung der Parasitosen, einer Verbindung nach Anspruch 1, nämlich Kupfer Glutamat.

**10.** Verwendung für Bekämpfung der Parasitosen, einer Verbindung nach Anspruch 1, nämlich Kupfer Asparaginat.

**11.** Verwendung für Bekämpfung der Parasitosen, einer Verbindung nach Anspruch 1, nämlich Kupfer Laktat.

**12.** Verwendung für Bekämpfung der Parasitosen, einer Verbindung nach Anspruch 1, nämlich Kupfer Zitrat.

**13.** Verwendung für Bekämpfung der Parasitosen, einer Verbindung nach Anspruch 1, nämlich Kupfer Glukonat-Glukoheptonat.

**14.** Verwendung für Bekämpfung der Parasitosen, einer Verbindung nach Anspruch 1, nämlich Kupfer Glukonat-Aspartat.

**15.** Verwendung für Bekämpfung der Parasitosen, einer Verbindung nach Anspruch 1, nämlich Kupfer Glukonat/Glutamat.

**16.** Verwendung für Bekämpfung der Parasitosen, einer Verbindung nach Anspruch 1, nämlich Kupfer Pyrrolidoncarboxylat.

**17.** Zubereitungen die für der Bekämpfung der Parasitosen bei der Bienen (Varroatosis) bestimmt sind, die darin bestehen dass eine Verbindung nach Ansprüche 1 bis 15 mit einem inerten Träger oder Vehikeln eingemischt wird, der begierdisch auf die Bienen ist.

**18.** Zubereitungen nach Anspruch 17 worin man ausserdem eine weitere Wirkstoff der synergische oder zusätzliche Wirkung aufweist, zugibt.

**19.** Verfahren fur Herstellung der Zubereitungen nach Ansprüche 17 und 18, der als Wirkstoff mindestens eine Verbindung nach Ansprüche 1 bis 16 enthält, dadurch gekennzeichnet ist dass der Wirktoff mit inerten Trägern verteilt wird um Pulver, Lösungen, Sirupen, Paste mit - gewünschtenfalls - Zusatz von beliebige Träger, Futter oder andere wirkstoff-haltige Mischungen - zu schaffen.

**20.** Ein neues Kupfer Salz mit einer organischen Carbonsäure das aus der Gruppe die aus Kupfer Glukonat/Saccharat, Kupfer Glukonat/Aspartat, Kupfer Glukonat/Glutamat and l-Pyrrolidon Carboxylat besteht, ausgewählt ist.

**21.** Verfahren fur die systematischen Bekämpfung der Parasitosen bei Bienen und überhaupt der Varroatosis der Bienen, das die Zerstörung der Milbe weder ohne Schadung fur die Bevolkerung der Bienenstocke noch ohne Verschlechterung der Qualitäte des Honigs and der Wachs erlaubt und weiterhin die Leistungsfähigkeit der Bienenstocke zu steigen, erlaubt, worin eine Zubereitung nach einer der Ansprüche 17 und 18 zu der Bevolkerung eines Bienenstock von Bienen, alleine oder eingeführt in der Futter der Bienen, eingegeben wird.

**22.** Verwendung von Glukonsäure und von der Salze davon, alleine oder als Zubereitung fur die Anregung der Aktivität der Bienen.

**23.** Verwendung von Glukoheptonsäure und von der Salze davon, alleine oder als Zubereitung, für die Erhöhung der Aktivität der Bienen.

**24.** Verwendung von Misch Salze von Glükonsäure und Glukoheptonsäure, alleine oder als Zubereitung fur die Erhöhung der Aktivität der Bienen.